# FASCICULE DE BREVET EUROPEEN

(11) **EP 0 996 019 B1**
(45) Date de publication et mention de la délivrance du brevet: **02.01.2004**
(21) Numéro de dépôt: 99402514.6
(22) Date de dépôt: 13.10.1999
(51) Int. Cl.: G02B 23/08

(54) **Dispositif pour l'observation jour/nuit à partir d'un véhicule**
Vorrichtung zur Tag -Nacht -Beobachtung von einem Fahrzeug aus
Day/night observation device from a vehicle

(30) Priorité: 19.10.1998 FR 9813081
(43) Date de publication de la demande: 26.04.2000
(73) Titulaire: GIAT INDUSTRIES, 78000 Versailles (FR)
(72) Inventeur: Hirard, Alain, 78000 Versailles (FR); Menager, Jean-Claude, 78480 Verneuil sur Seine (FR); Peion, Michel, 78450 Villepreux (FR)
(74) Mandataire: Célanie, Christian

(56) Documents cités:
- EP-A- 0 072 958
- EP-A- 0 463 929
- EP-A- 0 703 481
- FR-A- 2 552 893
- US-A- 4 626 905

## Description

Le secteur technique de la présente invention est celui des dispositfs assurant l'observation ou la vision extérieure à partir de l'intérieur d'un véhicule.

L'observation à partir d'un véhicule du type militaire ou la conduite de celui-ci se fait généralement à partir d'épiscopes disposés autour du poste de pilotage protégé des agressions extérieures. Les épiscopes assurent à l'observateur une vision jour, mais aucune vision de nuit. Pour résoudre ce problème, il est possible d'utiliser une caméra thermique. Mais les caméras thermiques sont actuellement des appareils d'encombrement relativement important qu'il n'est pas possible d'intégrer dans l'habitacle de l'observateur sans modification importante. Par contre, il existe actuellement des caméras thermiques non refroidies dont les dimensions seraient compatibles avec une implantation dans un poste d'observation ou de pilotage. Mais cette implantation est délicate à mettre en oeuvre car l'accessibilité au poste et à l'épiscope doit demeurer totale et ne doit en aucun cas être modifiée par la présence de la caméra.

C'est le but de l'invention de proposer un ensemble constituant une vision jour/nuit utilisable par un observateur ou un pilote à son poste de pilotage permettant de passer sans transition de la voie jour à la voie nuit.

Ainsi, l'invention a pour objet un dispositif pour l'observation jour/nuit à partir d'un véhicule à l'aide d'un épiscope et d'une caméra thermique extérieure permettant d'amener successivement les voies épiscopique et thermique vers un observateur situé à l'intérieur du véhicule, caractérisé en ce qu'il est constitué d'une platine tournante sur laquelle sont fixés l'épiscope et le système de visualisation de la caméra thermique, agencés de telle façon que la fenêtre de sortie de l'épiscope et l'écran du système de visualisation soient disposés suivant des plans sensiblement perpendiculaires entre eux afin d'obtenir un axe de vision confondu sur les deux voies, la platine étant montée par l'intermédiaire d'un joint étanche aux agents solides, liquides ou gazeux sur un support solidaire du véhicule.

Selon une réalisation particulière, la fenêtre de sortie de l'épiscope présente une hauteur sensiblement égale à celle de l'écran.

L'épiscope et le système de visualisation sont disposés en dehors de l'axe de rotation de la platine tournante.

Le système de visualisation est disposé à une distance plus proche de l'axe de rotation de la platine que l'épiscope.

Selon une autre réalisation particulière, le joint tournant est constitué d'une butée disposée entre deux épaulements délimités par le support et la platine, la butée étant maintenue par des moyens de serrage supportant un déflecteur.

Le moyen de serrage est constitué d'une bague de friction et d'une bague de serrage.

La bague de friction est solidaire du support et la bague de serrage de la platine tournante.

Le déflecteur se présente sous la forme d'un tronc de cône dont une base est engagée dans un évidement de la bague de serrage et l'autre base dans un évidement de la bague de friction.

La bague de friction se présente sous la forme d'une pièce en L dont une branche est interposée entre le support et la platine.

Un joint torique est disposé entre la bague de friction et la platine.

Un avantage de la présente invention réside dans la compacité de l'ensemble constitué par l'épiscope et la caméra avec une facilité de passage de la vision jour à la vision nuit par simple rotation.

Un autre avantage réside dans le fait que la position d'observation de l'observateur ou du pilote ne varie sensiblement pas lors du passage de la vision jour à la vision nuit.

Un autre avantage encore de l'invention réside dans la facilité de réalisation de l'étanchéité vis-à-vis de l'extérieur en raison de la structure même des moyens de l'invention.

Un autre avantage encore de l'invention réside dans l'ergonomie de l'assemblage pour l'observateur procurant une posture identique quelle que soit la voie utilisée.

D'autres caractéristiques, détails et avantages de l'invention apparaîtront plus clairement à la lecture du complément de description qui va suivre d'un mode particulier de réalisation donné à titre d'illustration en référence aux dessins annexés sur lesquels :
- la figure 1 réprésente une coupe du dispositif montrant l'utilisation de la voie jour,
- la figure 2 est une vue de dessus du dispositif avec la voie jour,
- la figure 3 est une vue de dessus du dispositif avec la voie nuit,
- la figure 4 est une coupe du joint réunissant la platine et son support.

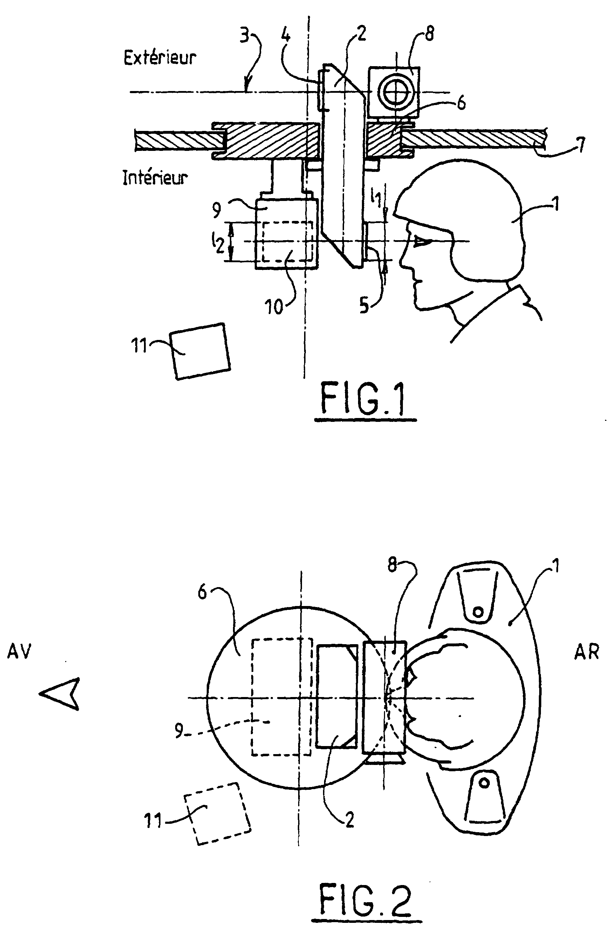

Sur la figure 1, on a représenté l'observateur 1 à l'intérieur d'un véhicule à son poste d'observation ou de pilotage, par exemple un véhicule militaire, observant l'environnement extérieur à l'aide d'un épiscope 2 suivant une ligne de vision 3. L'épiscope comporte classiquement une fenêtre d'entrée 4 et une fenêtre de sortie 5 au niveau de laquelle l'observateur se positionne. L'épiscope 2 est rendu solidaire de manière classique d'une platine 6 raccordée à un support 7 qui peut être une partie mobile ou fixe de la carcasse du véhicule. Sur cette platine 6 peut être fixée côté extérieur une caméra 8 dont l'axe de vision est orienté perpendiculairement à la ligne 3 sur cette figure. Cette caméra est connue en elle-même et n'a pas à être décrite plus complètement. Du côté intérieur, on fixe le système de visualisation 9 de la caméra avec son écran 10 sur lequel les images du champ extérieur sont amenées et le boîtier électronique 11 de commande de la caméra. Sur la figure, on voit que la platine 6 est montée rotative par rapport au support 7 de manière à amener successivement la fenêtre de sortie 5 de l'épiscope ou l'écran 10 par simple rotation. On peut prévoir une configuration dans laquelle la fenêtre de sortie 5 est située au même niveau que l'écran 10, c'est-à-dire que les axes de vision de ces deux éléments sont quasiment confondus. On peut également prévoir une fenêtre de sortie 5 de même hauteur que l'écran 10. Ainsi, l'ensemble du dispositif est inscrit dans un cylindre dont le rayon est minimisé tout en assurant une ergonomie d'observation ou de pilotage jour/nuit optimale avec des axes pratiquement confondus dans le sens vertical. Sur la figure 1, on voit encore que la fenêtre de sortie 5 est placée perpendiculairement à l'écran 10 et que la hauteur l₁ de la fenêtre est sensiblement égale à celle l₂ de l'écran. Cette disposition permet d'éviter toute gêne au pilote lors du passage d'un système de vision à un autre. Bien entendu, on pourrait également prévoir une largueur sensiblement identique pour la fenêtre 5 et l'écran 10. On notera que dans la configuration décrite, l'épiscope 2 est placé en avant de la caméra 8 extérieure, c'est-à-dire que celle-ci est pratiquement protégée lorsqu'elle n'est pas utilisée. On notera encore que tous les éléments du dispositif peuvent être remplacés très facilement en cas de détérioration, ce qui constitue un grand avantage sur le plan de la maintenance.

Sur la figure 2, on a représenté une vue de dessus montrant la position de l'observateur 1 par rapport au dispositif selon l'invention lorsque la voie jour est utilisée. Dans cette position, le dispositif de visualisation 9 est placé derrière la partie interne de l'épiscope 2 par rapport au pilote.

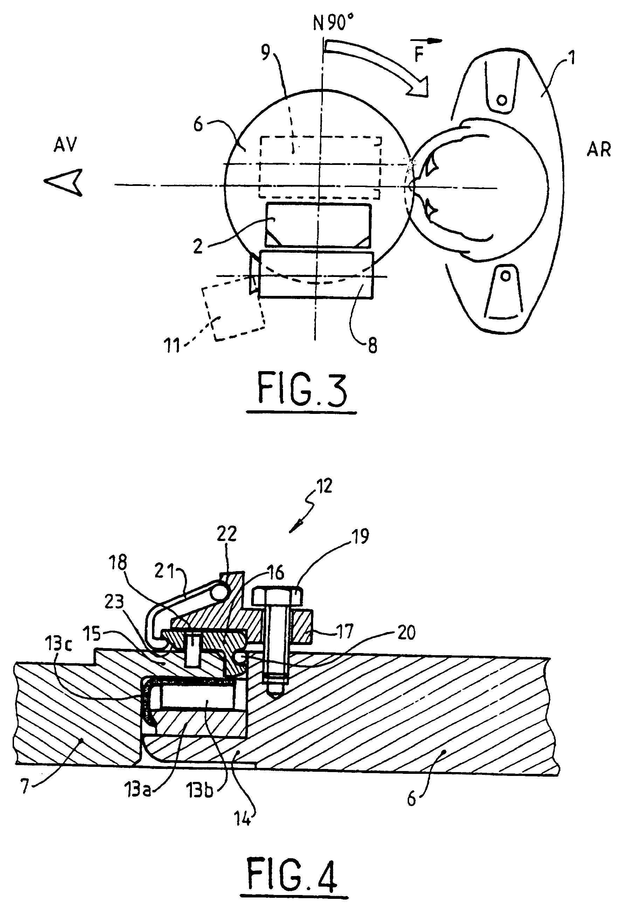

Sur la figure 3, on a représenté également une vue de dessus montrant la position de la caméra 8 après rotation de 90° environ de la platine 6, c'est-à-dire lorsque la voie nuit est utilisée. Dans cette position, le dispositif de visualisation 9 est placé au niveau de l'observateur 1 et l'épiscope 2 est en position latérale.

Sur la figure 4, on a représenté un joint tournant 12 réunissant la platine 6 au support 7. Ce joint est dans cet exemple du type butée à rouleaux, constitué d'une cage inférieure 13a, des rouleaux 13b emprisonnés dans une cage 13c. Ce joint est enserré entre deux épaulements respectifs 14 et 15 de la platine 6 et du support 7. Ce joint 12 est réglé en compression par un moyen de serrage constitué par une bague de friction 16 et une bague de serrage 17. Sur la figure, la bague 16 est fixée au support 7 par une goupille 18 et la bague 17 sur la platine 6 par des vis 19, la bague 17 prenant appui sur la bague 16. Pour améliorer l'étanchéité un joint torique 20 est interposé entre la bague 16 et la platine 6. La bague 16 se présente sous la forme d'un L dont l'une des branches est engagée entre la lèvre 15 et la platine 6. Un déflecteur 21 est interposé entre les deux bagues 16 et 17 de manière à interdire la pénétration de matière solide dans le joint 12. Ce déflecteur se présente sous la forme d'un tronc de cône dont la petite base est engagée dans un évidement 22 de la bague 17 et dont la grande base en engagée dans un évidement 23 de la bague 16. On obtient ainsi une étanchéité totale aux agents solides, liquides ou gazeux présents dans l'environnement extérieur.

## Revendications

1. Dispositif pour l'observation jour/nuit à partir d'un véhicule à l'aide d'un épiscope (2) et d'une caméra thermique (8) extérieure permettant d'amener successivement les voies épiscopique et thermique vers un observateur (1) situé à l'intérieur du véhicule, **caractérisé en ce qu'**il est constitué d'une platine tournante (6) sur laquelle sont fixés l'épiscope (2) et le système de visualisation (9) de la caméra thermique (8) agencés de telle façon que la fenêtre de sortie (5) de l'épiscope et l'écran (10) du système de visualisation soient disposés suivant des plans sensiblement perpendiculaires entre eux afin d'obtenir un axe de vision confondu sur les deux voies, la platine (6) étant montée par l'intermédiaire d'un joint (12) étanche aux agents solides, liquides ou gazeux sur un support (7) solidaire du véhicule.

2. Dispositif pour l'observation selon la revendication 1, **caractérisé en ce que** la fenêtre de sortie (5) de l'épiscope (2) présente une hauteur sensiblement égale à celle de l'écran (10).

3. Dispositif pour l'observation selon la revendication 1 ou 2, **caractérisé en ce que** l'épiscope (2) et la caméra (8) sont disposés en dehors de l'axe de rotation de la platine tournante (6).

4. Dispositif pour l'observation selon l'une des revendications 1 à 3, **caractérisé en ce que** le système de visualisation (9) est disposé plus proche de l'axe de rotation de la platine (6) que l'épiscope (2).

5. Dispositif pour l'observation selon une des revendications 1 à 4, **caractérisé en ce que** le joint tournant (12) est constitué d'une butée (13) disposée entre deux épaulements (14, 15) délimités par le support et la platine, maintenue par des moyens de serrage (16, 17) supportant un déflecteur (21).

6. Dispositif pour l'observation selon la revendication 5, **caractérisé en ce que** le moyen de serrage (16, 17) est constitué d'une bague de friction (16) et d'une bague de serrage (17).

7. Dispositif pour l'observation selon la revendication 6, **caractérisé en ce que** la bague de friction (16) est solidaire du support (7) et la bague de serrage (17) de la platine tournante (6).

8. Dispositif pour l'observation selon la revendication 7, **caractérisé en ce que** le déflecteur (21) se présente sous la forme d'un tronc de cône dont une base est engagée dans un évidement (22) de la bague de serrage (17) et l'autre base dans un évidement (23) de la bague de friction (16).

9. Dispositif pour l'observation selon l'une quelconque des revendications 5 à 8, **caractérisé en ce que** la bague de friction (16) se présente sous la forme d'une pièce en L dont une branche est interposée entre le support (7) et la platine (6).

10. Dispositif pour l'observation selon l'une quelconque des revendications 5 à 9, **caractérisé en ce qu'**un joint torique (20) est disposé entre la bague de friction (16) et la platine (6).

## Patentansprüche

1. Vorrichtung zur Beobachtung bei Tag/Nacht von einem Fahrzeug aus mit Hilfe eines Episkops (2) und einer Außen-Wärmekamera (8), die es ermöglicht, dem im Fahrzeug befindlichen Beobachter (1) den Weg durch das Episkop und den thermischen Weg nacheinander zuzuführen, **dadurch gekennzeichnet, dass** sie von einer Drehplatte (6) gebildet wird, auf der das Episkop (2) und das Anzeigesystem (9) der Wärmekamera (8) angebracht sind, wobei sie so angeordnet sind, dass das Austrittsfenster (5) des Episkops und der Bildschirm (10) des Anzeigesystems entsprechend nahezu senkrecht zueinander stehender Ebenen angebracht sind, um eine Sehachse zu erhalten, die mit den beiden Wegen zusammenfällt, wobei die Platte (6) mit Hilfe eines Gelenkes (12), das gegen feste, flüssige oder gasförmige Stoffe abgedichtet ist, an einem fest mit dem Fahrzeug verbundenen Träger (7) befestigt ist.

2. Vorrichtung zur Beobachtung nach Anspruch 1, **dadurch gekennzeichnet, dass** das Austrittsfenster (5) des Episkops (2) eine Höhe aufweist, die nahezu gleich der des Bildschirmes (10) ist.

3. Vorrichtung zur Beobachtung nach Anspruch 1 oder 2, **dadurch gekennzeichnet, dass** das Episkop (2) und die Kamera (8) außerhalb der Drehachse der Drehplatte (6) angeordnet sind.

4. Vorrichtung zur Beobachtung nach einem der Ansprüche 1 bis 3, **dadurch gekennzeichnet, dass** das Anzeigesystem (9) in einem geringeren Abstand zur Drehachse der Platte (6) als das Episkop (2) angeordnet ist.

5. Vorrichtung zur Beobachtung nach einem der Ansprüche 1 bis 4, **dadurch gekennzeichnet, dass** die Drehdichtung (12) von einem Anschlag (13) gebildet wird, der zwischen zwei durch den Träger und die Platte begrenzten Schultern (14, 15) angeordnet ist, wobei der Anschlag durch Klemmmittel (16, 17), die einen Abweiser (21) tragen, festgehalten wird.

6. Vorrichtung zur Beobachtung nach Anspruch 5, **dadurch gekennzeichnet, dass** das Klemmmittel (16, 17) von einem Reibungsring (16) und einem Klemmring (17) gebildet wird.

7. Vorrichtung zur Beobachtung nach Anspruch 6, **dadurch gekennzeichnet, dass** der Reibungsring (16) mit dem Träger (7) und der Klemmring (17) mit der Drehplatte (6) fest verbunden ist.

8. Vorrichtung zur Beobachtung nach Anspruch 7, **dadurch gekennzeichnet, dass** der Abweiser (21) sich in Form eines Kegelstumpfes darstellt, dessen eine Sockelfläche in eine Ausnehmung (22) des Klemmringes (17) und dessen andere Sockelfläche in eine Ausnehmung (23) des Reibungsringes (16) eingreift.

9. Vorrichtung zur Beobachtung nach irgendeinem der Ansprüche 5 bis 8, **dadurch gekennzeichnet, dass** der Reibungsring (16) sich in Form eines L-förmigen Teiles darstellt, dessen ein Arm zwischen den Träger (7) und die Platte (6) eingefügt ist.

10. Vorrichtung zur Beobachtung nach irgendeinem der Ansprüche 5 bis 9, **dadurch gekennzeichnet, dass** ein O-Ring (20) zwischen dem Reibungsring (16) und der Platte (6) angeordnet ist.

## Claims

1. A device for day/night observation from a vehicle using an episcope (2) and an external thermal imager (8) that allows the episcopic and thermal modes to be made available to an observer (1) located inside the vehicle, wherein it is constituted by a revolving plate (6) upon which the episcope (2) and the thermal imager (8) visualisation system (9) are fastened, arranged such that the episcope's outlet window (5) and the visualisation system's monitor (10) are arranged along substantially perpendicular planes to each other so as to obtain the same line of sight for the two modes, the plate (6) being mounted by means of a joint (12) impermeable to solids, liquids or gases on a support (7) integral with the vehicle.

2. Observation device according to Claim 1, wherein the outlet window (5) of the episcope (2) is of a height substantially equal to that of the monitor (10).

3. Observation device according to Claims 1 or 2, wherein the episcope (2) and the imager (8) are placed outside of the revolving axis of revolution of the plate (6).

4. Observation device according to one of Claims 1 to 3, wherein the visualisation system (9) is placed closer to the plate's (6) axis of revolution than the episcope (2).

5. Observation device according to one of Claims 1 to 4, wherein the rotating joint (12) is constituted by an abutment (13) placed between two shoulders (14, 15) delimited by the support and the plate, the abutment being held by tightening means (16, 17) supporting a deflector (21).

6. Observation device according to Claim 5, wherein the tightening means (16, 17) are constituted by a friction ring (16) and a tightening ring (17).

7. Observation device according to Claim 6, wherein the friction ring (16) is integral with the support (7) and the tightening ring (17) with the revolving plate (6).

8. Observation device according to Claim 7, wherein the deflector (21) is in the shape of a truncated cone of which one end is engaged in a recess (22) in the tightening ring (17) and whose other end is engaged in a recess (23) in the friction ring (16).

9. Observation device according to any one of Claims 5 to 8, wherein the friction ring (16) is L-shaped, one branch of which is positioned between the support (7) and the plate (6).

10. Observation device according to any one of Claims 5 to 9, wherein an O-ring (20) is placed between the friction ring (16) and the plate (6).
